(19)

Europäisches
Patentamt
European
Patent Office
Office européen
des brevets

(11) **EP 3 780 355 A1**

(12) **EUROPEAN PATENT APPLICATION**
published in accordance with Art. 153(4) EPC

(43) Date of publication:
**17.02.2021 Bulletin 2021/07**

(21) Application number: **19784848.4**

(22) Date of filing: **20.03.2019**

(51) Int Cl.:
*H02K 3/12* (2006.01)        *H02K 1/16* (2006.01)
*H02K 1/18* (2006.01)        *H02K 3/18* (2006.01)
*H02P 25/22* (2006.01)

(86) International application number:
**PCT/JP2019/011796**

(87) International publication number:
**WO 2019/198451 (17.10.2019 Gazette 2019/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2018 JP 2018074939**

(71) Applicant: **Mitsubishi Electric Corporation Tokyo 100-8310 (JP)**

(72) Inventors:
 • **IKEDA, Hiroko**
  **Tokyo 100-8310 (JP)**

 • **YAMAGUCHI, Shinichi**
  **Tokyo 100-8310 (JP)**
 • **TAKIZAWA, Yuji**
  **Tokyo 100-8310 (JP)**
 • **HIROTANI, Yu**
  **Tokyo 100-8310 (JP)**
 • **ITO, Kazumasa**
  **Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **ROTATING ELECTRIC MACHINE AND ELECTRIC POWER STEERING DEVICE HAVING ROTATING ELECTRIC MACHINE**

(57)    A stator (40) includes: a core back portion (43); a plurality of teeth (44) extending inward in a radial direction of the stator (40) from the core back portion; a first system coil portion (46) and a second system coil portion (47) wound on each of the teeth (44); and a magnetic interference reduction member (48) provided between the first system coil portion (46) and the second system coil portion (47) and configured to reduce magnetic interference between the first system coil portion (46) and the second system coil portion (47). Further, the first system coil portion (46) and the second system coil portion (47) are connected to mutually different power supply sources, that is, the first system coil portion (46) and the second system coil portion (47) are each connected to a first system power supply source (20) or a second system power supply source (30).

FIG. 2

## Description

Technical Field

The present invention relates to a rotating electric machine including a plurality of winding groups, and an electric power steering device including the rotating electric machine.

Background Art

There are known rotating electric machines in which a plurality of winding groups are wound on each tooth and switched to allow current to flow therethrough, as with a rotating electric machine described in Patent Literature 1.

Citation List

Patent Literature

[PTL 1] JP 2013-111 734 A

Summary of Invention

Technical Problem

However, in the rotating electric machine described in Patent Literature 1, when a plurality of winding groups is wound on each tooth, an effect of magnetic interference between the winding groups is increased. As a result, a problem arises in that controllability of the rotating electric machine is reduced.
The present invention has been made to solve the above-mentioned problem and therefore has an object to provide a rotating electric machine and an electric power steering device including the rotating electric machine, with which when a plurality of winding groups is wound on each tooth, it is possible to prevent reduction in controllability caused by magnetic interferences.

Solution to the Problem

In order to solve the above-mentioned problem, a rotating electric machine according to the present invention includes a stator having an annular shape, the stator including: a core back portion; a plurality of teeth extending inward in a radial direction of the stator from the core back portion; a plurality of winding groups wound on each of the plurality of teeth; and a magnetic interference reduction member provided between adjacent winding groups of the plurality of winding groups and configured to reduce magnetic interference between the adjacent winding groups.
The plurality of winding groups is to be connected to mutually different power supply sources. The plurality of winding groups are each separated from another corresponding winding group in the radial direction or a circumferential direction of the stator by the magnetic interference reduction member.

Advantageous Effects of the Invention

The rotating electric machine according to the present invention has the above-mentioned configuration, and thus it is possible to obtain the rotating electric machine and the electric power steering device including the rotating electric machine, with which when a plurality of winding groups are wound on each tooth, reduction in controllability caused by magnetic interference can be prevented.

Brief Description of Drawings

FIG. 1    is a sectional view of an electric drive device including a rotating electric machine according to a first embodiment of the present invention.
FIG. 2    is a schematic view for illustrating a stator and a rotor of the rotating electric machine of FIG. 1.
FIG. 3    is a partially enlarged view of the stator of FIG. 2.
FIG. 4    is a schematic view for illustrating a stator and a rotor for comparison with the stator and the rotor of the rotating electric machine according to the first embodiment of the present invention.

FIG. 5A    is a schematic view for illustrating magnetic paths through the stator of FIG. 4.

FIG. 5B    is a schematic view for illustrating magnetic paths through the stator of FIG. 2.

FIG. 6    is a graph for comparison in torque and magnetic interference rate between the rotating electric machine including the stator of FIG. 2 and a rotating electric machine including the stator of FIG. 4.

FIG. 7    is a schematic view for illustrating a part of a stator in a second embodiment of the present invention.

FIG. 8    is a schematic view for illustrating a part of a stator in a third embodiment of the present invention.

FIG. 9    is a schematic view for illustrating a part of a stator in a fourth embodiment of the present invention.

FIG. 10    is a schematic view for illustrating a part of a stator in a fifth embodiment of the present invention.

FIG. 11    is a schematic view for illustrating a part of a stator in a sixth embodiment of the present invention.

FIG. 12    is a schematic view for illustrating a part of a stator in a modification example of the sixth embodiment of the present invention.

FIG. 13    is a schematic view for illustrating a part of a stator in a seventh embodiment of the present invention.

FIG. 14    is a schematic view for illustrating a part of a stator in an eighth embodiment of the present invention.

FIG. 15    is a schematic view for illustrating a part of a stator in a ninth embodiment of the present invention.

FIG. 16    is a schematic view for illustrating a shape before the stator of FIG. 15 is formed.

FIG. 17    is a schematic view for illustrating a part of a stator in a tenth embodiment of the present invention.

FIG. 18    is a schematic view for illustrating a part of a stator in an eleventh embodiment of the present invention.

FIG. 19    is a schematic view for illustrating a stator in a twelfth embodiment of the present invention.

FIG. 20    is a schematic view for illustrating a stator in a thirteenth embodiment of the present invention.

FIG. 21    is a schematic view for illustrating an electric power steering device according to a fourteenth embodiment of the present invention.

Description of Embodiments

First Embodiment

Now, a first embodiment of the present invention is described with reference to the accompanying drawings.

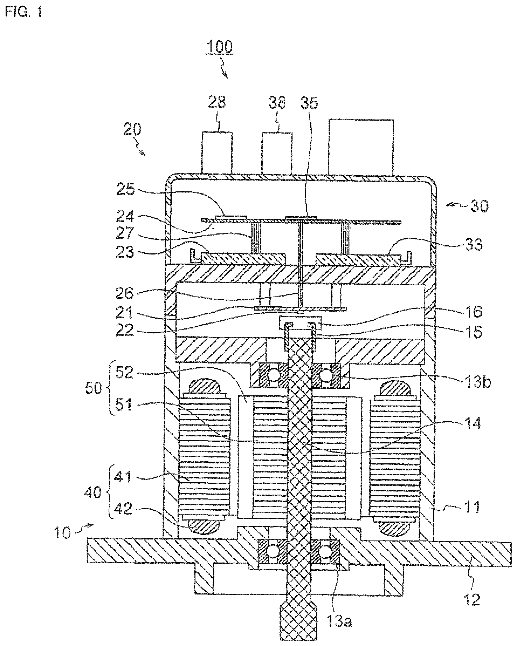

As illustrated in FIG. 1, an electric drive device 100 includes a rotating electric machine 10, a first system power supply source 20, and a second system power supply source 30. The first system power supply source 20 and the second system power supply source 30 form independent inverter devices configured to apply three-phase AC current to windings of the rotating electric machine 10. That is, the rotating electric machine 10 is a rotating electric machine to be driven with three-phase AC power of two systems.

The rotating electric machine 10 is a permanent magnet-type concentrated-winding rotating electric machine, and includes a frame 11 configured to accommodate components therein. The frame 11 is joined to a front housing 12 of the rotating electric machine 10 through use of bolts (not shown). On an inner wall of the frame 11, a stator 40 is provided. The stator 40 includes a stator core 41, and stator windings 42 wound on the stator core 41. The stator core 41 is formed by laminating core sheets made of a magnetic member. The magnetic member may be, for example, an electromagnetic steel plate. Further, the stator core 41 is an armature core, and the stator windings 42 are armature windings.

On an inner side in a radial direction of the stator 40, a rotator 50 is provided. The rotator 50 is formed to be rotatable. The rotator 50 includes a rotator core 51 and permanent magnets 52 mounted to the rotator core 51. At the center of the rotator core 51, a shaft 14 is mounted. The shaft 14 is rotatably supported by a bearing 13a and a bearing 13b. The shaft 14 and the rotator 50 are provided rotatably with respect to the stator 40.

In order to detect a rotation speed of the rotator 50, there are provided a holder 15 and a sensor magnet 16. The holder 15 is mounted at an end portion of the shaft 14. The sensor magnet 16 is held by the holder 15 to rotate at the same speed as the rotator 50. Further, a first substrate 21 is provided so as to be opposed to the sensor magnet 16. On the first substrate 21, a semiconductor sensor 22 is mounted. The semiconductor sensor 22 is configured to detect a rotation speed of the sensor magnet 16 so as to detect the rotation speed of the rotator 50.

The electric drive device 100 further includes a first system drive circuit 23 and a second system drive circuit 33. The first system drive circuit 23 is a drive circuit for applying current to windings of the first system out of the stator windings 42. The second system drive circuit 33 is a drive circuit for applying current to windings of the second system out of the stator windings 42. The first system drive circuit 23 and the second system drive circuit 33 are connected via wirings 27 to a second substrate 24. Further, the semiconductor sensor 22 is connected via a wiring 26 to the second substrate 24.

On the second substrate 24, a first system control circuit 25 and a second system control circuit 35 are provided. The first system control circuit 25 is a control circuit configured to control the first system drive circuit 23. The second system control circuit 35 is a control circuit configured to control the second system drive circuit 33.

The first system control circuit 25 and the second system control circuit 35 respectively control the first system drive circuit 23 and the second system drive circuit 33 based on information about the rotation speed of the rotator 50 detected by the semiconductor sensor 22. The first system control circuit 25 is connected to a first system connector 28, and the second system control circuit 35 is connected to a second system connector 38.

The first system connector 28 and the second system connector 38 are provided to supply power from an external power supply (not shown) to their corresponding power supply source. The first system drive circuit 23, the first system control circuit 25, and the first system connector 28 form the first system power supply source 20. The second system drive circuit 33, the second system control circuit 35, and the second system connector 38 form the second system power supply source 30.

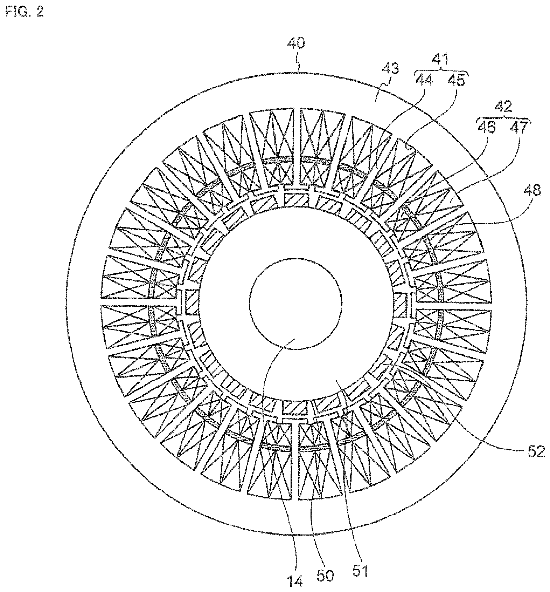

As illustrated in FIG. 2, the annular stator 40 includes a core back portion 43. Twenty-four teeth 44 extend inward in the radial direction from the core back portion 43. Further, each gap between adjacent two of the teeth 44 forms a slot 45. The teeth 44 and the slots 45 form the stator core 41. Further, on an inner side in the radial direction of the stator 40, the rotator 50 including the rotator core 51 and the shaft 14 is provided. On an outer periphery of the rotator core 51, twenty permanent magnets 52 are mounted at regular pitches in a circumferential direction of the rotator 50. That is, the rotator 50 has twenty poles.

On each tooth 44, the stator windings 42 being armature windings are concentratedly wound. A portion concentratedly wound on each tooth 44, of the stator winding 42 is referred to as "coil portion". The coil portion wound on an inner side of each tooth 44 in the radial direction is defined as a first system coil portion 46, and the coil portion wound on an outer side of each tooth 44 in the radial direction is defined as a second system coil portion 47. The respective first system coil portions 46 and the respective second system coil portions 47 have the same number of turns. For simple description, in FIG. 2 and subsequent figures, illustrations of an insulator provided between the stator windings 42 and the stator core 41, and the frame provided on an outer periphery of the stator core 41 are omitted.

The first system coil portions 46 are connected to the first system power supply source 20 for applying current (see FIG. 1). The first system coil portions 46 are formed as first system winding groups each including one set of windings of three phases: a U phase, a V phase, and a W phase. Similarly, the second system coil portions 47 are connected to the second system power supply source 30 for applying current (see FIG. 1). The second system coil portions 47 are formed as second system winding groups each including one set of windings of three phases: a U phase, a V phase, and a W phase.

As described above, as illustrated in FIG. 1, the electric drive device 100 includes the first system power supply source 20 and the second system power supply source 30, and as illustrated in FIG. 2, the stator windings 42 each include the first system coil portion 46 and the second system coil portion 47. With this, even when the first system power supply source 20 or the second system power supply source 30 has failed, the electric drive device 100 can continue its operation in the same manner as in normal operation through use of a power supply source of an unfailed system. Further, even when any first system coil portion 46 or any second system coil portion 47 has failed, the electric drive device 100 can continue its operation in the same manner as in normal operation through use of a coil portion of an unfailed system.

Each of the first system coil portions 46 and each of the second system coil portions 47 are provided in a corresponding slot 45 while being separated from each other in the radial direction of the stator 40. Between each of the first system coil portions 46 and each of the second system coil portions 47, a corresponding magnetic interference reduction member 48 is provided. The magnetic interference reduction members 48 are formed of a magnetic member. The magnetic member is formed separately from the teeth 44 and the core back portion 43.

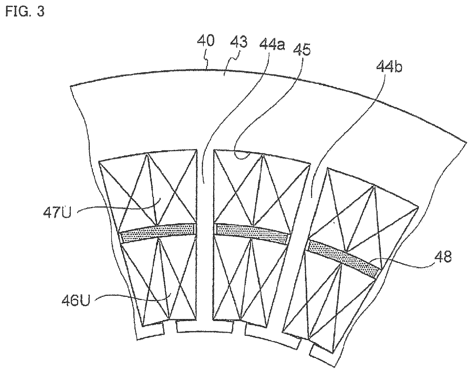

FIG. 3 is an enlarged view of a part of the stator 40 of FIG. 2. In FIG. 3, adjacent teeth 44a and 44b are illustrated. A corresponding magnetic interference reduction member 48 is provided with a slight gap from the adjacent teeth 44a and 44b in the circumferential direction of the stator 40. The magnetic interference reduction members 48 are provided with a slight gap from other adjacent teeth of the stator 40 as well.

A first system coil portion 46U wound on the tooth 44a is a +U-phase winding, and a second system coil portion 47U wound thereon is a +U-phase winding. In this example, signs each indicate a winding direction of the respective windings; a plus sign indicates a clockwise winding direction, and a minus sign indicates a counterclockwise winding direction. That is, the first system coil portion and the second system coil portion wound on the same tooth have the same winding direction.

With this configuration, even when the first system power supply source 20 or the second system power supply source 30 (see FIG. 1) has failed, and only winding groups of any one system are energized, the rotating electric machine 10 can maintain magnetic symmetry as in normal operation. Further, even when any first system coil portion 46 or any second system coil portion 47 has failed, and only winding groups of any one system are energized, the rotating electric machine 10 can maintain magnetic symmetry as in normal operation. Thus, the rotating electric machine 10 is free from unbalanced rotation, which produces an effect of suppressing an increase in torque ripple.

Further, when only winding groups of any one system are to be energized, current may be applied to winding groups of a normal system in an amount twice larger than an amount in normal operation so as to output torque equivalent to that in normal operation. In this case as well, reverse magnetic field applied to the permanent magnets 52 of the rotator 50 (see FIG. 2) is not increased. This produces an effect of preventing such a situation that the permanent magnets 52 are demagnetized, and then the torque of the rotating electric machine 10 is reduced.

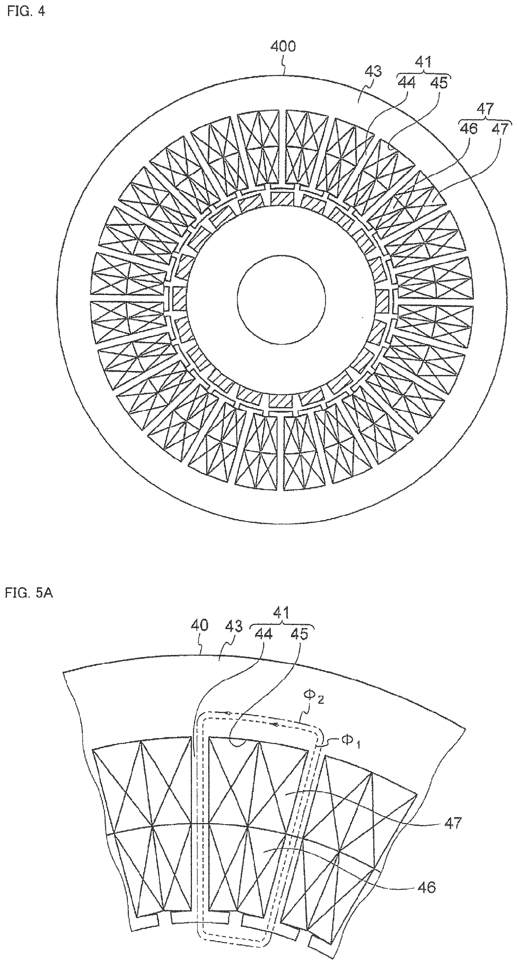

For comparison with the stator 40 in the first embodiment, the configuration of a stator 400 is illustrated in FIG. 4. The stator 400 has no magnetic interference reduction member 48 (see FIG. 2) between the first system coil portions 46 and the second system coil portion 47 unlike the first embodiment. Other configurations thereof are the same as those of the stator 40 of FIG. 2. FIG. 5A is an enlarged view for illustrating a flow of each magnetic flux in the stator 400 having no magnetic interference reduction member 48 as illustrated in FIG. 4.

In the stator 400 having no magnetic interference reduction member 48 as illustrated in FIG. 5A, a magnetic flux $\varphi_1$ of each first system coil portion 46 and a magnetic flux $\varphi_2$ of each second system coil portion 47 pass the same magnetic path, and hence large magnetic interference occurs between corresponding first system coil portion 46 and second system coil portion 47.

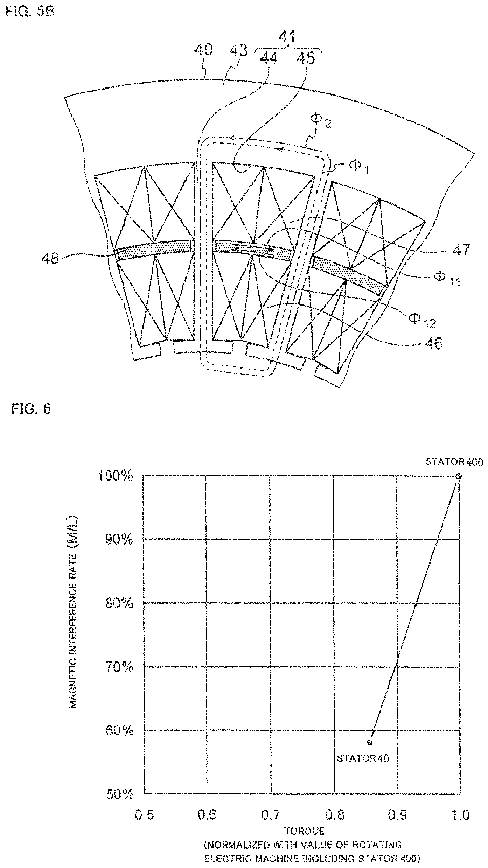

FIG. 5B is an enlarged view for illustrating a flow of each magnetic flux in the stator 40 of FIG. 2. In the stator 40 having the magnetic interference reduction members 48 in the first embodiment, a magnetic flux $\varphi_{11}$ being a part of the magnetic flux of each first system coil portion 46, and a magnetic flux $\varphi_{12}$ being a part of the magnetic flux of each second system coil portion 47 flow through a corresponding magnetic interference reduction member 48.

Inductance corresponding to the magnetic flux flowing through each magnetic interference reduction member 48 is defined as "A". Current flowing through each first system coil portion 46 is defined as "IX", and current flowing through each second system coil portion 47 is defined as "IY". Mutual inductance of corresponding first system coil portion 46 and second system coil portion 47 is defined as "M". Self-inductance of each first system coil portion 46 is defined as "L". Then, the magnetic flux $\varphi1$ generated by the current IX to interlink each first system coil portion 46 is represented by

$$\varphi1 = L{\times}IX + \varphi_{11} = L{\times}IX + A{\times}IX = (L+A){\times}IX.$$

Further, the magnetic flux $\varphi2$ generated by the current IY to interlink each second system coil portion 47 is represented by

$$\varphi2 = M{\times}IY - \varphi_{12} = M{\times}IY - A{\times}IY = (M-A){\times}IY.$$

A magnetic interference rate is $\varphi2/\varphi1 = M/L$ in the stator 400 of FIG. 5A and is $\varphi2/\varphi1 = (M-A)/(L+A)$ in the stator 40 in the first embodiment as illustrated in FIG. 5B. In this example, it is assumed, for simple calculation, that IX = IY. The magnetic interference rate (M-A)/(L+A) in the stator 40 of FIG. 5B is smaller than the magnetic interference rate M/L in the stator 400 of FIG. 5A. That is, providing the magnetic interference reduction members 48 in the stator 40 enables reduction in magnetic interference rate, that is, rate of magnetic interference between corresponding first system coil portion 46 and second system coil portion 47.

FIG. 6 is a graph for showing reduction in magnetic interference rate, which is achieved by the magnetic interference reduction members 48. The vertical axis represents M/L, that is, the rate of magnetic interference between corresponding first system coil portion 46 and second system coil portion 47. The horizontal axis represents torque whose value is normalized with a torque value of the rotating electric machine that includes the stator 400 having no magnetic interference reduction member 48 being set to 1.0.

As compared with the case of employing the stator 400, in the case of employing the stator 40 having the magnetic interference reduction members 48 in the first embodiment, the magnetic interference rate can be reduced by about 40 %. Consequently, it is possible to obtain an effect of improving controllability of the rotating electric machine 10 to achieve stable operation thereof.

Further, in the stator 400 having no magnetic interference reduction member 48, when current is applied to only winding groups of any one of the first system and the second system due to reduction in current supply or any failure of a coil, magnetic force, which is generated by applied current, is locally increased in the circumferential direction. In order to prevent the permanent magnets 52 from being demagnetized by the thus-generated magnetic force, it is required to double the length in the axial direction of the rotating electric machine 10.

Meanwhile, in the stator 40 in the first embodiment, torque of the rotating electric machine 10 is reduced due to leakage magnetic flux from the magnetic interference reduction members 48, at a reduction rate of about 15 %. To compensate for the reduction rate of the torque, it is only required to increase the length in the axial direction of the rotating electric machine 10 by 1.18 times. Therefore, as compared with the case of employing the stator 400 having no magnetic interference reduction member 48, the requisite length in the axial direction of the rotating electric machine 10 is shortened, which produces an effect of downsizing the rotating electric machine 10.

As described above, the rotating electric machine 10 according to the first embodiment is the rotating electric machine 10 including the annular stator 40. The stator 40 includes the core back portion 43, the plurality of teeth 44 extending inward in the radial direction from the core back portion, the slots 45 formed between the teeth 44, the first system coil portions 46 and the second system coil portions 47 each wound on a corresponding tooth 44 and provided in a corresponding slot 45, and the magnetic interference reduction members 48 each of which is arranged to separate corresponding first system coil portion 46 and second system coil portion 47 and configured to reduce magnetic interference between the corresponding first system coil portion 46 and second system coil portion 47, and hence it is possible to reduce the magnetic interference and suppress reduction in controllability caused by the magnetic interference.

Further, the magnetic interference reduction members 48 are provided separately from the teeth 44 and the core back portion 43, and hence the magnetic interference reduction members 48 can be easily manufactured.

In the first embodiment, corresponding first system coil portion 46 and second system coil portion 47 are separated from each other in the radial direction of the stator 40, but are not strictly required to be separated in the radial direction. For example, those first system coil portion 46 and second system coil portion 47 may be separated from each other in a direction oblique to the radial direction.

Further, the magnetic interference reduction members 48 may have any shape other than the shape of FIG. 3 as long as corresponding first system coil portion 46 and second system coil portion 47 can be separated from each other.

Second Embodiment

Next, a second embodiment of the present invention is described. In the following embodiments, the same reference symbols as those of FIG. 1 to FIG. 6 denote identical or similar components to those of FIG. 1 to FIG. 6, and thus a detailed description thereof is omitted.

In the second embodiment, each of the number of turns and an amount of current to be applied differs between each first system coil portion and each second system coil portion in contrast to the first embodiment.

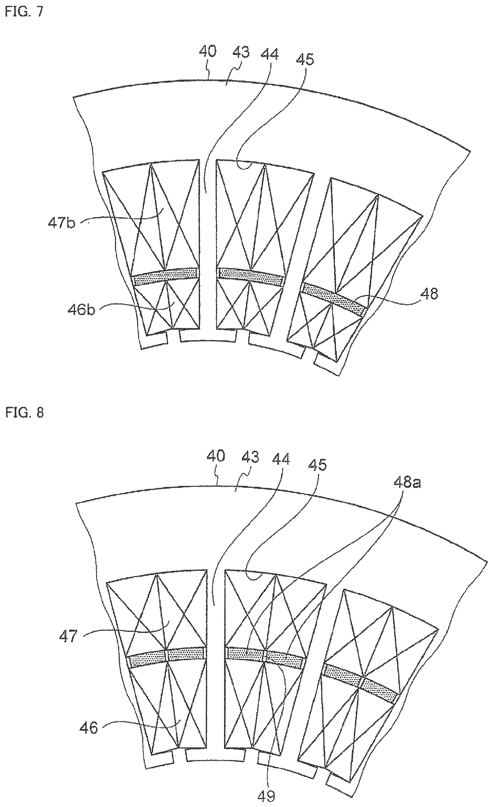

As illustrated in FIG. 7, each first system coil portion 46b is provided on an inner side in the radial direction of a corresponding slot 45, and each second system coil portion 47b is provided on an outer side in the radial direction of a corresponding slot 45. The number of turns of each first system coil portion 46b is set smaller than that of each second system coil portion 47b. Further, a value of current to be applied from the first system power supply source 20 (see FIG. 1) to each first system coil portion 46b is set smaller than that of current to be applied from the second system power supply source 30 to each second system coil portion 47b. Other configurations thereof are the same as those of the first embodiment.

The first system coil portions 46b and the first system power supply source 20, and the second system coil portions 47b and the second system power supply source 30 in the second embodiment differ in the number of turns of each coil portion and a value of current to be applied thereto.

Accordingly, when the stator 40 of the rotating electric machine 10 in the electric drive device 100 (see FIG. 1) is to be applied to electric power steering of an automobile, for example, it is conceivable to employ the first system coil portions 46b and the first system power supply source 20 of the first system that requires a smaller number of turns of each coil portion and a smaller amount of current to be applied thereto. With this, an inverter employed in the first system drive circuit 23 of the first system power supply source 20 can be a low-capacity inverter having small current capacity, heat generation amount, and failure rate.

Employing the low-capacity inverter having small failure rate is advantageous in that, when the electric drive device 100 is to be applied to any high-level automatic driving device of an automobile, for example, the electric drive device 100 can easily satisfy a reliability requirement for the automatic driving device at low cost.

Further, for example, through selective use of the first system coil portions 46b and the first system power supply source 20 of the first system whose output is small, or the second system coil portions 47b and the second system power supply source 30 of the second system whose output is large in accordance with a driving pattern expected from a route from a departure place to a destination, the electric drive device 100 can output a required amount of power while saving power consumption.

As described above, a value of current to be applied to each first system coil portion 46b from the first system power supply source 20 is smaller than that of current to be applied to each second system coil portion 47b from the second system power supply source 30. Further, the number of turns of each first system coil portion 46b is smaller than that of each second system coil portion 47b. Therefore, an inverter employed in the first system drive circuit 23 can be a low-capacity inverter so that the reliability of the electric drive device can be improved and power consumption can be saved.

In the second embodiment, a value of current to be applied to each first system coil portion 46b is smaller than that of current to be applied to each second system coil portion 47b, and the number of turns of each first system coil portion 46b is smaller than that of each second system coil portion 47b, but the present invention is not limited to this configuration. For example, the following is applicable: a value of current to be applied to each first system coil portion 46b is larger than that of current to be applied to each second system coil portion 47b, and the number of turns of each first system coil portion 46b is larger than that of each second system coil portion 47b.

Alternatively, the following configuration is also applicable: each first system coil portion 46b and each second system coil portion 47b have the same number of turns, and a value of current to be applied to each first system coil portion 46b is different from that of current to be applied to each second system coil portion 47b. Other than the above, the following configuration is also applicable: a value of current to be applied to each first system coil portion 46b is the same as that of current to be applied to each second system coil portion 47b, and the number of turns of each first system coil portion 46b is different from that of each second system coil portion 47b.

Third Embodiment

Next, a third embodiment of the present invention is described. In the third embodiment, the shape of each magnetic interference reduction member is changed from that in the first embodiment.
As illustrated in FIG. 8, magnetic interference reduction members 48a are arranged in the slots 45 such that every two of the magnetic interference reduction members 48a are arranged side by side with a gap 49 in the circumferential direction of each slot 45.
That is, the magnetic interference reduction members 48a, which each have a circumferential length being about half the circumferential length of each slot 45, are arranged side by side by twos in contrast with the magnetic interference reduction members 48 in the first embodiment. Other configurations thereof are the same as those of the first embodiment.
With such arrangement that the magnetic interference reduction members 48a, which each have the circumferential length being about half the circumferential length of each slot 45, are arranged side by side by twos in the circumferential direction, the magnetic interference reduction members 48a can be easily arranged between the first system coil portions 46 and the second system coil portions 47 at the time of assembling the rotating electric machine 10.

Fourth Embodiment

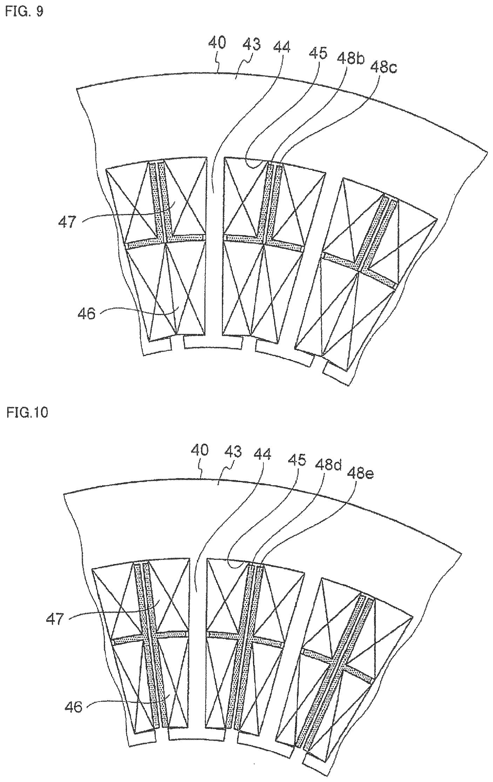

Next, a fourth embodiment of the present invention is described. In the fourth embodiment, each magnetic interference reduction member has a shape of being extended in the radial direction in contrast with the shape in the first embodiment.
As illustrated in FIG. 9, every two second system coil portions 47 are provided while being separated from each other in the circumferential direction in a corresponding slot 45. Further, magnetic interference reduction members 48b are each arranged in the circumferential direction in a portion between corresponding first system coil portion 46 and second system coil portion 47, and also arranged to extend outward in the radial direction in a portion in which corresponding two second system coil portions 47 are separated from each other. That is, the magnetic interference reduction members 48b each have an L shape.
Similarly, magnetic interference reduction members 48c are each arranged in the circumferential direction in a portion between corresponding first system coil portion 46 and second system coil portion 47, and also arranged to extend outward in the radial direction in a portion in which corresponding two second system coil portions 47 are separated from each other. That is, the magnetic interference reduction members 48c each have an L shape.
Moreover, the magnetic interference reduction members 48b and the magnetic interference reduction members 48c are arranged with a slight gap from the core back portion 43. Further, corresponding magnetic interference reduction member 48b and magnetic interference reduction member 48c are arranged side by side in the circumferential direction. Furthermore, corresponding magnetic interference reduction member 48b and magnetic interference reduction member 48c have a gap therebetween.
By arranging the magnetic interference reduction members 48b and the magnetic interference reduction members 48c as described above, each magnetic interference reduction member 48b and each magnetic interference reduction member 48c separate and isolate corresponding first system coil portion 46 and second system coil portion 47 from each other in the radial direction, and also separate and isolate corresponding adjacent second system coil portions 47 from each other in the circumferential direction.
With this configuration, the magnetic flux of each second system coil portion 47 passes corresponding magnetic interference reduction member 48b and magnetic interference reduction member 48c to interlink the core back portion 43, and hence the rate of magnetic interference between corresponding first system coil portion 46 and second system coil portion 47 can be further reduced.
As described above, the magnetic interference reduction members 48b and the magnetic interference reduction members 48c separate adjacent second system coil portions 47 from each other in the circumferential direction, and hence the rate of magnetic interference between corresponding first system coil portion 46 and second system coil portion 47 can be further reduced.
In the fourth embodiment, the magnetic interference reduction members 48b and 48c are each arranged to extend in the radial direction in a portion between corresponding two second system coil portions 47, but any other shape is applicable. For example, the magnetic interference reduction members 48b and 48c may each extend inward in the radial direction in a portion between corresponding two first system coil portions 46, to thereby isolate the two first system coil portions 46 from each other in the circumferential direction.

Further, in the fourth embodiment, the first system coil portions 46 or the second system coil portions 47 are separated from each other in the circumferential direction of the stator 40, but are not strictly required to be separated in the circumferential direction. For example, the first system coil portions 46 or the second system coil portions 47 may be separated from each other in a direction oblique to the circumferential direction.

Fifth Embodiment

Next, a fifth embodiment of the present invention is described. In the fifth embodiment, each magnetic interference reduction member has a shape of being extended in the radial direction in contrast with the shape in the first embodiment.

As illustrated in FIG. 10, adjacent two first system coil portions 46 are provided while being separated from each other in the circumferential direction in a corresponding slot 45. Further, adjacent two second system coil portions 47 are provided while being separated from each other in the circumferential direction.

Moreover, each magnetic interference reduction member 48d and each magnetic interference reduction member 48e are arranged in the circumferential direction in a portion between corresponding first system coil portion 46 and second system coil portion 47, and also arranged to extend in the radial direction in a portion in which corresponding adjacent two first system coil portions 46 are separated from each other and in a portion in which corresponding adjacent two second system coil portions 47 are separated from each other. That is, the magnetic interference reduction members 48d and the magnetic interference reduction members 48e each have a T shape.

Moreover, the magnetic interference reduction members 48d and the magnetic interference reduction members 48e are arranged with a slight gap from the core back portion 43. Further, corresponding magnetic interference reduction member 48d and magnetic interference reduction member 48d are arranged side by side in the circumferential direction. Furthermore, corresponding magnetic interference reduction member 48b and magnetic interference reduction member 48c have a gap therebetween.

By arranging the magnetic interference reduction members 48d and the magnetic interference reduction members 48e as described above, each magnetic interference reduction member 48d and each magnetic interference reduction member 48e separate and isolate corresponding first system coil portion 46 and second system coil portion 47 from each other in the radial direction, and also separate and isolate corresponding adjacent first system coil portions 46 and corresponding adjacent second system coil portions 47 from each other in the circumferential direction.

With this configuration, the magnetic flux of each second system coil portion 47 passes corresponding magnetic interference reduction member 48d and magnetic interference reduction member 48e. This produces an effect of further reducing the rate of magnetic interference between corresponding first system coil portion 46 and second system coil portion 47.

As described above, the magnetic interference reduction members 48d and the magnetic interference reduction members 48e separate adjacent first system coil portions 46 from each other in the circumferential direction, and also separate adjacent second system coil portions 47 from each other in the circumferential direction. Therefore, the rate of magnetic interference between corresponding first system coil portion 46 and second system coil portion 47 can be further reduced.

Sixth Embodiment

Next, a sixth embodiment of the present invention is described. In the sixth embodiment, the first system coil portions and the second system coil portions are arranged in the circumferential direction in contrast with the first embodiment.

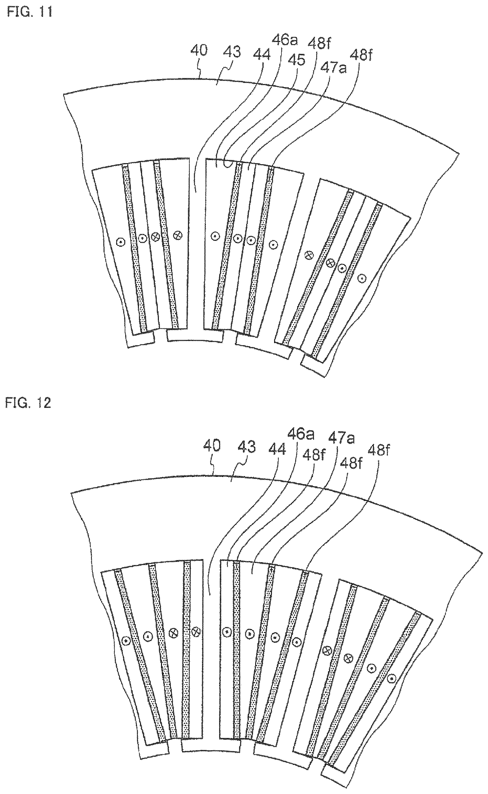

As illustrated in FIG. 11, each first system coil portion 46a is provided on a side closer to a corresponding tooth 44, in a corresponding slot 45. Further, each second system coil portion 47a is provided on a side farther from a corresponding tooth 44. The first system coil portions 46a and the second system coil are arranged in the circumferential direction of the stator 40.

Corresponding first system coil portion 46a and second system coil portion 47a are separated from each other, and a corresponding magnetic interference reduction member 48f is provided between the separated coil portions while extending in a plate shape in the radial direction of the stator 40. Each magnetic interference reduction member 48f is provided with a slight gap from an inner wall of the core back portion 43 at a corresponding slot 45.

That is, corresponding first system coil portion 46a and second system coil portion 47a are separated and isolated from each other by a corresponding magnetic interference reduction member 48f. Two sets of such corresponding first system coil portion 46a, magnetic interference reduction member 48f, and second system coil portion 47a are combined and arranged in each slot 45. Other configurations thereof are the same as those of the first embodiment.

By arranging corresponding first system coil portion 46a and second system coil portion 47a side by side in the circumferential direction, and providing a corresponding magnetic interference reduction member 48f therebetween, the following effect can be achieved. That is, the rate of mutual magnetic interference between corresponding first system coil portion 46a and second system coil portion 47a is reduced, and also each magnetic interference reduction member 48f serves as a reinforcing member, to thereby enhance rigidity in the radial direction of the stator 40.

In the sixth embodiment, each second system coil portion 47a is provided on the side farther from a corresponding tooth 44, but each first system coil portion 46a may be provided on the side farther from a corresponding tooth 44. Further, the shape of each magnetic interference reduction member 48f is not limited to the shape of being extended in the plate shape in the radial direction as illustrated in FIG. 10. Each magnetic interference reduction member 48f may have any other shape as long as corresponding first system coil portion 46a and second system coil portion 47a can be separated and isolated from each other.

Moreover, in the sixth embodiment, two sets of corresponding first system coil portion 46a, magnetic interference reduction member 48f, and second system coil portion 47a are combined and arranged in a corresponding slot 45, but any other combination can be employed. For example, as illustrated in FIG. 12, in such arrangement that two sets of corresponding first system coil portion 46a, magnetic interference reduction member 48f, and second system coil portion 47a are combined and arranged, another magnetic interference reduction member 48f may be additionally provided between such adjacent sets. With this configuration, the number of magnetic interference reduction members 48f each serving as a reinforcing member is increased, and hence the rigidity of the stator 40 can be further enhanced.

Seventh Embodiment

Next, a seventh embodiment of the present invention is described. In the seventh embodiment, each magnetic interference reduction portion is brought into contact with adjacent teeth in contrast with the first embodiment.

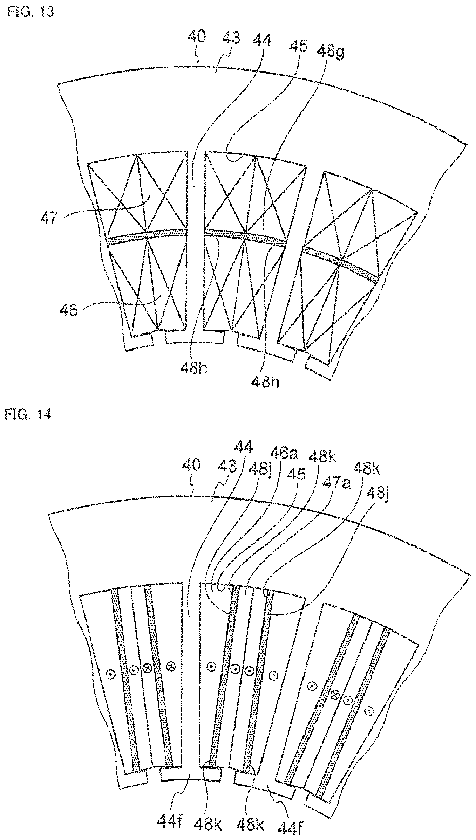

As illustrated in FIG. 13, each magnetic interference reduction member 48g provided in a corresponding slot 45 is brought into contact with adjacent teeth 44 in the circumferential direction of the stator 40, at its contact portions 48h being end portions in the circumferential direction. Other configurations thereof are the same as those of the first embodiment.

As described above, each magnetic interference reduction member 48g is brought into contact with corresponding teeth 44 in the circumferential direction of the stator 40, and hence magnetic resistances of the teeth 44 and each magnetic interference reduction member 48g are reduced. This produces the following effect: the effect of reducing the magnetic interference by each magnetic interference reduction member 48g is increased. Further, providing each magnetic interference reduction member 48g in contact with corresponding teeth 44 gives an effect of enhancing the rigidity of the stator 40.

Eighth Embodiment

Next, an eighth embodiment of the present invention is described. In the eighth embodiment, each magnetic interference reduction portion is brought into contact with a corresponding tooth and the core back portion in the radial direction in contrast with the sixth embodiment.

As illustrated in FIG. 14, each plate-like magnetic interference reduction member 48j extending in the radial direction is provided between corresponding first system coil portion 46a and second system coil portion 47a. Each magnetic interference reduction member 48j is brought into contact with the core back portion 43 at one contact portion 48k being an end portion thereof on an outer side in the radial direction of the stator 40.

Further, each magnetic interference reduction member 48j is brought into contact with a leading edge portion 44f of a corresponding tooth 44 having a flange-like shape, at another contact portion 48k on an inner side in the radial direction of the stator 40. Other forms thereof are the same as those of the sixth embodiment.

As described above, each contact portion 48k in the radial direction of each magnetic interference reduction member 48g is brought into contact with at least one of the leading edge portion 44f of a corresponding tooth 44 or the core back portion 43, and hence magnetic resistances of each magnetic interference reduction member 48j and a corresponding tooth 44 are reduced. This produces the following effect: the effect of reducing the magnetic interference by each magnetic interference reduction member 48j is increased. Further, an effect of enhancing the rigidity of the stator 40 can be achieved.

Ninth Embodiment

Next, a ninth embodiment of the present invention is described. In the ninth embodiment, each magnetic interference reduction portion is formed integrally with a corresponding tooth in contrast with the first embodiment.

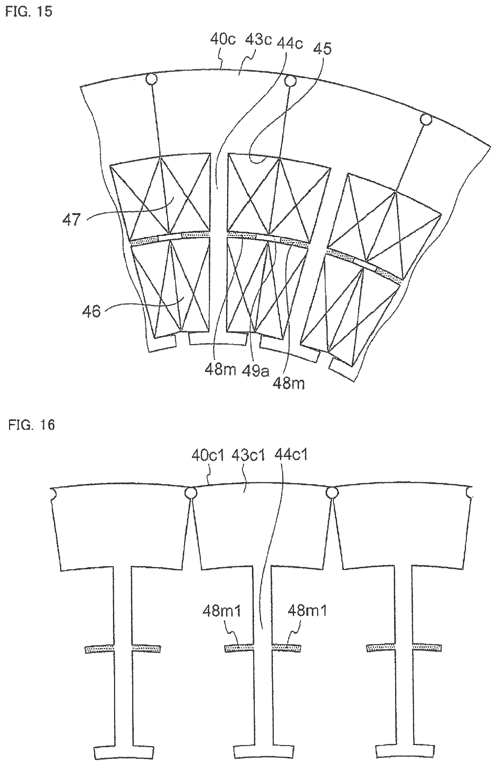

As illustrated in FIG. 15, a stator 40c includes a plurality of core back portions 43c and teeth 44c each formed integrally with a corresponding core back portion 43c. On each tooth 44c, corresponding first system coil portion 46 and second system coil portion 47 are wound. As a result of the winding on each tooth 44c, corresponding first system coil portion 46 and second system coil portion 47 are provided on an inner side and an outer side in the radial direction, respectively, of each slot 45 formed between adjacent teeth 44c.

Between corresponding first system coil portion 46 and second system coil portion 47, magnetic interference reduction members 48m are arranged. The magnetic interference reduction members 48m are formed integrally with the teeth 44c. Further, between those magnetic interference reduction members 48m, a gap 49a is formed in the circumferential direction.

FIG. 16 is a view for illustrating the configuration of core sheets 40c1 in the stator 40c of FIG. 15 before the core sheets 40c1 are laminated to form the core back portions 43c and the teeth 44c by assembly. In this state, the first system coil portions 46 and the second system coil portions 47 have not yet been provided. The core sheets 40c1 have a structure of being divided in the circumferential direction at a center portion between a plurality of adjacent core sheets 40c1.

That is, the core sheets 40c1 have a circumferentially divided structure. Each tooth 44c1 is formed integrally with a corresponding one of the circumferentially divided core back portions 43c1. On each of the teeth 44c1 of the core sheets for forming the stator 40c, corresponding magnetic interference reduction members 48m1 are formed to extend symmetrically in the circumferential direction of each core sheet 40c1. By joining one core back portion 43c1 with its adjacent core back portion 43c1 for lamination, the annular stator 40c of FIG. 15 can be formed. After the formation of the stator 40c, corresponding first system coil portion 46 and second system coil portion 47 are wound on each tooth 44c. Other configurations thereof are the same as those of the first embodiment.

As described above, the stator 40c is divided in the circumferential direction for each tooth 44c. Further, corresponding first system coil portion 46 and second system coil portion 47 are wound on each tooth 44c, and the stator 40c is formed into the annular shape. Further, each tooth 44c and corresponding magnetic interference reduction members 48m are integrally formed.

This structure is advantageous in that corresponding first system coil portion 46 and second system coil portion 47 can be easily wound on each tooth 44c as compared with the case of winding corresponding first system coil portion 46 and second system coil portion 47 on each tooth 44 of the finished stator 40 as in the first embodiment. Moreover, the stator 40c can be manufactured easily due to the circumferentially divided structure.

Tenth Embodiment

Next, a tenth embodiment of the present invention is described. In the tenth embodiment, adjacent teeth are coupled with each other on an inner side in the radial direction in contrast with the first embodiment.

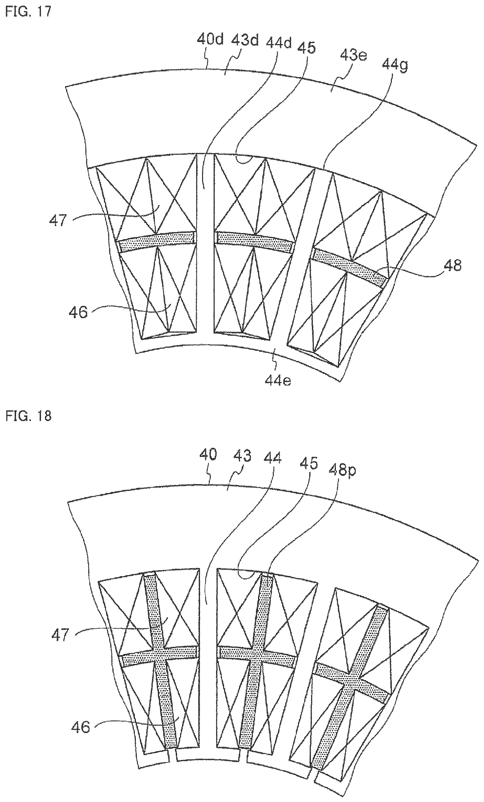

As illustrated in FIG. 17, in a stator 40d, an annular core back portion 43d and a plurality of teeth 44d is formed. The teeth 44d extend inward in the radial direction from an inner periphery of the core back portion 43d. The core back portion 43d is formed separately from the teeth 44d, and forms an outer core 43e. Flange portions on the inner side in the radial direction, of the teeth 44d are each joined and integrated with end portions adjacent thereto so that the teeth 44d form an inner core 44e as a whole.

The outer core 43e and the inner core 44e are joined at an arc-shaped fitting portion 44g. Other configurations thereof are the same as those of the first embodiment.

In such configuration, the teeth 44d are each joined and integrated with end portions adjacent thereto, and hence large magnetic interference occurs between corresponding first system coil portion 46 and second system coil portion 47. However, the magnetic interference reduction members 48 are each arranged between corresponding first system coil portion 46 and second system coil portion 47. Thus, the rate of magnetic interference between corresponding first system coil portion 46 and second system coil portion 47 is reduced.

Further, the stator 40d has an inner and outer core structure including the outer core 43e and the inner core 44e, and the outer core 43e and the inner core 44e having wound thereon the first system coil portions 46 and the second system coil portions 47 are combined so that the stator 40d can be formed easily and the productivity for the stator 40d is increased.

As described above, the stator 40d is divided into the inner core 44e including the plurality of teeth 44d and the outer core 43e including the core back portion 43d, and the outer core 43e and the inner core 44e having wound thereon the first system coil portions 46 and the second system coil portions 47 are combined to form the stator 40d. Further, leading edge portions of adjacent teeth 44d are coupled with each other, and hence it is possible to increase the productivity for the stator 40d while reducing the magnetic interference rate.

In the tenth embodiment, the fitting portion 44g between the outer core 43e and the inner core 44e has the arc shape, but the present invention is not limited to this shape. For example, the fitting portion 44g may have an equilateral-octagonal shape or other polygonal shape.

Eleventh Embodiment

Next, an eleventh embodiment of the present invention is described. In the eleventh embodiment, magnetic interference reduction members are each formed into a cross shape in contrast with the first embodiment.

As illustrated in FIG. 18, adjacent first system coil portion 46 and second system coil portion 47 are arranged while being separated from each other in the radial direction. Further, adjacent first system coil portions 46 are arranged while being separated from each other in the circumferential direction. Adjacent second system coil portions 47 are also arranged while being separated from each other in the circumferential direction.

At portions at which the first system coil portions 46 and the second system coil portions 47 are separated as described above, magnetic interference reduction members 48p are arranged. The magnetic interference reduction members 48p are each formed into the cross shape. Other configurations thereof are the same as those of the first embodiment.

In this way, it is possible to ensure the rigidity of the stator 40 while reducing the rate of magnetic interference between corresponding first system coil portion 46 and second system coil portion 47.

Twelfth Embodiment

Next, a twelfth embodiment of the present invention is described. In the twelfth embodiment, each magnetic interference reduction member is inserted only between corresponding first system coil portion and second system coil portion of the same phase in contrast with the first embodiment.

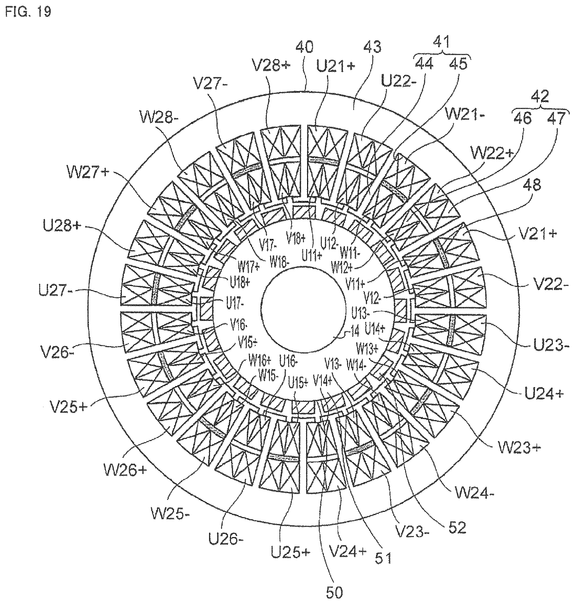

As illustrated in FIG. 19, the stator 40 has twenty-four teeth 44. Further, the number of poles in the rotator 50 is twenty. As for coils arranged in the first system coil portions 46, coils of respective phases are arranged in the order of U11+, U12-, W11-, W12+, V11+, V12-, U13-, U14+, W13+, W14-, V13-, V14+, U15+, U16-, W15-, W16+, V15+, V16-, U17-, U18+, W17+, W18-, V17-, and V18+ in a clockwise direction, and are connected to the first system power supply source 20.

Further, as for coils arranged in the second system coil portions 47, coils of respective phases are arranged in the order of U21+, U22-, W21-, W22+, V21+, V22-, U23-, U24+, W23+, W24-, V23-, V24+, U25+, U26-, W25-, W26+, V25+, V26-, U27-, U28+, W27+, W28-, V27-, and V28+ in a clockwise direction.

Of the slots 45, in such slots 45 that windings of the same phase are provided, the magnetic interference reduction members 48 are each arranged between corresponding first system coil portion 46 and second system coil portion 47. Specifically, the magnetic interference reduction members 48 are provided between U11+ and U21+, W11- and W21-, V11+ and V21+, U13- and U23-, W13+ and W23+, V13- and V23-, U15+ and U25+, W15- and W25-, V15+ and V25+, U17- and U27-, W17+ and W27-, and V18+ and V28-. That is, each magnetic interference reduction member 48 is provided between corresponding first system coil portion 46 and second system coil portion 47 in every other slot 45.

As for the first system coil portion 46 and the second system coil portion 47 which are provided in the same slot 45 and have the same phase, a corresponding magnetic interference reduction member 48 is provided between those first system coil portion 46 and second system coil portion 47. Thus, it is possible to reduce the rate of magnetic interference between corresponding first system coil portion 46 and second system coil portion 47 and also reduce leakage magnetic flux. This produces an effect of suppressing torque reduction in the rotating electric machine 10.

Thirteenth Embodiment

Next, a thirteenth embodiment of the present invention is described. In the thirteenth embodiment, the first system coil portions are arranged alternately on the inner side and the outer side in the radial direction of the slots in contrast with the first embodiment. The second system coil portions are also arranged alternately on the outer side and the inner side in the radial direction of the slots.

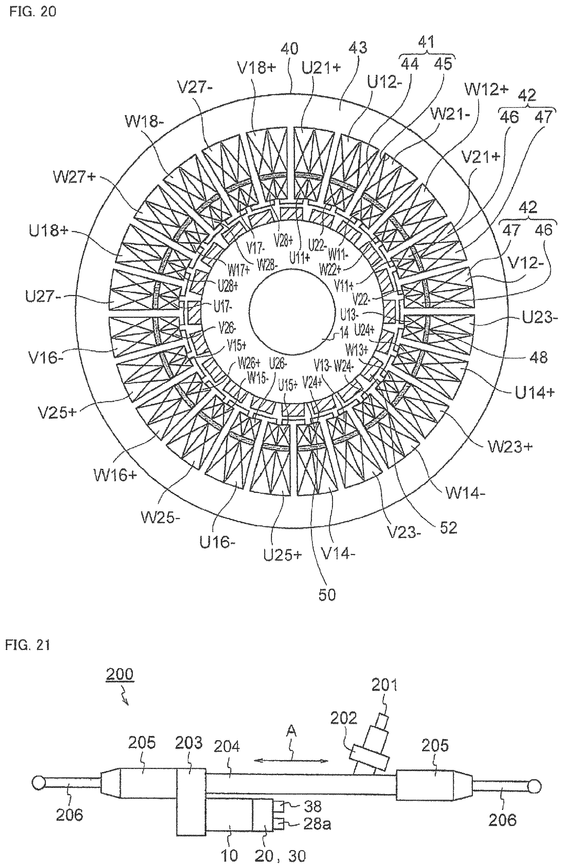

As illustrated in FIG. 20, the stator 40 has twenty-four teeth 44. Further, the number of poles in the rotator 50 is twenty. As for coils arranged in the first system coil portions 46, coils of respective phases are arranged in the order of U11+, U22-, W 11-, W22+, V11+, V22-, U13-, U24+, W13+, W24-, V13-, V24+, U15+, U26-, W15-, W26+, V15+, V26-, U17-, U28+, W17+, W28-, V17-, and V28+ in a clockwise direction.

As for coils arranged in the second system coil portions 47, coils of respective phases are arranged in the order of U21+, U12-, W21-, W12+, V21+, V12-, U23-, U14+, W23+, W14-, V23-, V14+, U25+, U16-, W25-, W16+, V25+, V16-, U27-, U18+, W27+, W18-, V27-, and V18+ in a clockwise direction.

In this example, the coils of U11+, U12-, W11-, W12+, V11+, V12-, U13-, U14+, W13+, W14-, V13-, V14+, U15+, U16-, W15-, W16+, V15+, V16-, U17-, U18+, W17+, W18-, V17-, and V18+ are coils of the first winding system group, and those coils are connected to the first system power supply source 20.

Further, the coils of U21+, U22-, W21-, W22+, V21+, V22-, U23-, U24+, W23+, W24-, V23-, V24+, U25+, U26-, W25-, W26+, V25+, V26-, U27-, U28+, W27+, W28-, V27-, and V28+ are coils of the second winding system group, and those coils are connected to the second system power supply source 30.

That is, in a certain slot 45 of the stator 40, the coil of the first winding system group is provided in the first system coil portion 46, and the coil of the second winding system group is provided in the second system coil portion 47. In another slot 45 being a slot located adjacent to the certain slot 45, the coil of the second winding system group is provided in the first system coil portion 46, and the coil of the first winding system group is provided in the second system coil portion 47.

Accordingly, a positional relationship in the radial direction between the coil of the first winding system group and the coil of the second winding system group varies between adjacent slots 45. Alternatively, a positional relationship in the circumferential direction between the coil of the first winding system group and the coil of the second winding system group may vary between adjacent slots 45.

As described above, between adjacent teeth 44, there is formed a corresponding slot 45 in which corresponding first system coil portion 46 and second system coil portion 47 wound on a corresponding tooth 44 are provided, and a positional relationship in the radial direction or the circumferential direction of the stator 40, between the first winding system group and the second winding system group provided in the same slot 45 varies for the slots 45. Thus, the leakage magnetic flux is equal for both the first winding system group and the second winding system group and then, the inductance is equal for the both. This produces an effect of further improving controllability.

In the thirteenth embodiment, the stator 40 includes twenty-four teeth 44, and the number of poles of the rotator 50 is twenty, but the stator may include any other number of teeth and the rotator may have any other number of poles.

Fourteenth Embodiment

Next, a fourteenth embodiment of the present invention is described. In the fourteenth embodiment, the rotating electric machine 10 of the first to thirteenth embodiments is applied to an electric power steering device of an automobile.

An electric power steering device 200 of an automobile illustrated in FIG. 21 is described. A driver controls a steering wheel (not shown), and resultant steering torque is transmitted via a steering device (not shown) to an input sensor 201. A torque sensor 202 detects the torque, and inputs the detected torque to the first system power supply source 20 and the second system power supply source 30. The first system power supply source 20 and the second system power supply source 30 receive power supplied from a battery (not shown) via the power supply connectors 28 and 38 (first system connector and second system connector).

Further, vehicle speed or other information about the automobile is input to the first system power supply source 20 and the second system power supply source 30. The first system power supply source 20 and the second system power supply source 30 calculate required assist torque from the steering torque, and the vehicle speed or other information about the automobile, to supply power to the permanent magnet-type rotating electric machine 10. The rotating electric machine 10 is provided in a direction parallel to a movement direction A of a rack shaft (not shown).

The torque generated by the rotating electric machine 10 is transmitted to a gearbox 203 having incorporated therein a belt and a ball screw (not shown). After that, the torque generated by the rotating electric machine 10 is reduced by the gearbox 203 to move, in the movement direction A, a rack shaft 204 provided inside a housing. Consequently, a tie rod 206 is moved to assist the driver's steering force, to thereby turn wheels of the automobile. Accordingly, the driver can turn the vehicle with small effort.

In such an electric power steering device, cogging torque and torque ripple generated from the rotating electric machine 10 are transmitted to the driver via a gear of the steering device (not shown). Thus, in order to achieve a satisfactory steering feel, it is desired to reduce the cogging torque and the torque ripple. Further, it is also desired to suppress the vibrations and noise in the rotating electric machine 10.

In view of the above, through application of the rotating electric machine 10 according to the first to thirteenth embodiments of the present invention to the electric power steering device 200 of the automobile, in particular, even when a failure occurs in any winding group, or the first system power supply source 20a or the second system power supply source 30a in the electric power steering device 200, the driver's steering force can be stably assisted. Further, the following advantage is obtained: stable controllability and comfortable steering feeling are obtained in normal operation.

As described above, the electric power steering device 200 including the rotating electric machine 10 can stably assist the driver's steering force during any failure. Further, the electric power steering device 200 has an advantage that stable controllability and comfortable steering feeling can be obtained in normal operation.

In the first to thirteenth embodiments, the stators 40, 40a, 40b, 40c, and 40d each include twenty-four teeth 44, and the number of poles of the rotator 50 is twenty, but the stator may include any other number of teeth and the rotator may have any other number of poles. Further, in the first to thirteenth embodiments, the stators 40, 40a, 40b, 40c, and 40d each include the first system coil portion and the second system coil portion, and may further include a coil portion of another system.

List of Reference Signs

| | |
|---|---|
| 10 | rotating electric machine |
| 40, 40a, 40b, 40c, 40d | stator |
| 43, 43c, 43d | core back portion |
| 43e | outer core |
| 44, 44a, 44b, 44c, 44d | tooth |
| 44e | inner core |
| 44f | leading edge portion |
| 45 | slot |
| 46, 46a, 46b, 46U | first system coil portion |
| 47, 47a, 47b, 47U | second system coil portion |
| 48, 48a, 48b, 48c | magnetic interference reduction member |
| 48d, 48e, 48f, 48g | magnetic interference reduction member |
| 48j, 48m, 48p | magnetic interference reduction member. |

**Claims**

1. A rotating electric machine, comprising a stator having an annular shape, the stator including:

   - a core back portion;
   - a plurality of teeth extending inward in a radial direction of the stator from the core back portion;
   - a slot formed between every adjacent teeth of the plurality of teeth;
   - a plurality of winding groups wound on each of the plurality of teeth and provided in each slot; and
   - a magnetic interference reduction member provided to separate adjacent winding groups of the plurality of winding groups from each other and configured to reduce magnetic interference between the adjacent winding groups.

2. The rotating electric machine according to claim 1,
   wherein the magnetic interference reduction member is brought into contact with a corresponding one of the plurality of teeth in a circumferential direction of the stator.

3. The rotating electric machine according to claim 1 or 2,
   wherein the magnetic interference reduction member is brought into contact with at least one of a leading edge portion of a corresponding one of the plurality of teeth or the core back portion.

4. The rotating electric machine according to any one of claims 1 to 3,
   wherein the plurality of winding groups includes two winding groups, and
   wherein the value of current to be applied to one of the two winding groups is larger than the value of current to be applied to another one of the two winding groups.

5. The rotating electric machine according to any one of claims 1 to 4,
   wherein the plurality of winding groups includes two winding groups, and
   wherein the number of turns is larger in one of the two winding groups than in another one of the two winding groups.

6. The rotating electric machine according to any one of claims 1 to 5,
   wherein the plurality of winding groups includes two winding groups, and
   wherein when one of the two winding groups and another one of the two winding groups, which are provided in the same slot, have the same phase, the magnetic interference reduction member is provided between the one of the two winding groups and the another one of the two winding groups.

7. The rotating electric machine according to any one of claims 1 to 6,
   wherein the plurality of winding groups includes two winding groups, and
   wherein a positional relationship in the radial direction or a circumferential direction of the stator, between one of the two winding groups and another one of the two winding groups which are provided in the same slot, varies for each slot.

8. The rotating electric machine according to any one of claims 1 to 7,
   wherein the stator is divided into an inner core including the plurality of teeth, and an outer core including the core back portion, and
   wherein the inner core on which the plurality of winding groups is wound is combined with the outer core to form the stator.

9. The rotating electric machine according to any one of claims 1 to 8,
   wherein adjacent teeth of the plurality of teeth are coupled with each other at leading edge portions thereof.

10. The rotating electric machine according to any one of claims 1 to 7,
    wherein the stator is divided for each of the plurality of teeth in a circumferential direction, and
    wherein the plurality of winding groups is wound on each of the plurality of teeth, and the stator is formed into the annular shape.

11. The rotating electric machine according to any one of claims 1 to 10,
    wherein each of the plurality of teeth and the magnetic interference reduction member are integrally formed.

12. The rotating electric machine according to any one of claims 1 to 10,
    wherein the magnetic interference reduction member is provided separately from the plurality of teeth and the core back portion.

13. An electric power steering device,
    comprising the rotating electric machine of any one of claims 1 to 12.

FIG. 1

FIG. 2

FIG. 3

FIG. 4

FIG. 5A

FIG. 5B

FIG. 6

FIG. 7

FIG. 8

FIG. 9

FIG.10

FIG. 11

FIG. 12

FIG. 13

FIG. 14

FIG. 15

FIG. 16

FIG. 17

FIG. 18

FIG. 19

FIG. 20

FIG. 21

## INTERNATIONAL SEARCH REPORT

| International application No. |
|---|
| PCT/JP2019/011796 |

### A. CLASSIFICATION OF SUBJECT MATTER

Int. Cl. H02K3/12(2006.01)i, H02K1/16(2006.01)i, H02K1/18(2006.01)i,
H02K3/18(2006.01)i, H02P25/22(2006.01)i

According to International Patent Classification (IPC) or to both national classification and IPC

### B. FIELDS SEARCHED

Minimum documentation searched (classification system followed by classification symbols)
Int. Cl. H02K3/12, H02K1/16, H02K1/18, H02K3/18, H02P25/22

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | Microfilm of the specification and drawings annexed to the request of Japanese Utility Model Application No. 151104/1980 (Laid-open No. 074685/1982) (TOKYO SHIBAURA ELECTRIC CO., LTD.) 08 May 1982, description, page 1, line 3 to page 5, line 7, fig. 1, 2, 5-7 (Family: none) | 1, 12 |
| Y | | 2-11, 13 |
| Y | JP 2010-81715 A (TOSHIBA MITSUBISHI-ELECTRIC INDUSTRIAL SYSTEMS CORP.) 08 April 2010, abstract, paragraphs [0015]-[0049], fig. 1-3 (Family: none) | 2-11, 13 |
| Y | EP 2136455 A1 (ABB RESEARCH LTD.) 23 December 2009, paragraphs [0022]-[0027], fig. 3, 4 (Family: none) | 3-11, 13 |

☒ Further documents are listed in the continuation of Box C.　　☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06.06.2019 | 18.06.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/011796

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2002-186205 A (NISSAN MOTOR CO., LTD.) 28 June 2002, paragraphs [0034]-[0042], fig. 3, 4 & US 2002/0074871 A1, paragraphs [0028]-[0037], fig. 3, 4 & EP 1215800 A2 | 3-11, 13 |
| Y | JP 2002-186211 A (NISSAN MOTOR CO., LTD.) 28 June 2002, paragraphs [0068]-[0070], fig. 2-9, 11 & US 2002/0074889 A1, paragraphs [0057]-[0059], fig. 2-9, 11 & EP 1215801 A2 | 3-11, 13 |
| Y | JP 2014-176215 A (NSK LTD.) 22 September 2014, claim 1, fig. 1-4 & WO 2014/136166 A1 & CN 104205616 A | 4-11, 13 |
| Y | WO 2017/168574 A1 (MITSUBISHI ELECTRIC CORP.) 05 October 2017, fig. 1-4 & US 2019/0068018 A1, fig. 1-4 & EP 3439156 A1 & CN 108886313 A | 7-11 |
| Y | WO 2015/011939 A1 (MITSUBISHI ELECTRIC CORP.) 29 January 2015, abstract, fig. 1, 2 & US 2016/0181876 A1, abstract, fig. 1, 2 & EP 3026791 A1 & CN 105409094 A | 8-9 |
| Y | JP 2004-180449 A (ASMO CO., LTD.) 24 June 2004, paragraph [0026], fig. 3 (Family: none) | 8-9 |
| A | WO 2016/132450 A1 (MITSUBISHI ELECTRIC CORP.) 25 August 2016, fig. 11-15 & US 2017/0366115 A1, fig. 11-15 & EP 3261248 A1 | 1-13 |
| A | JP 2014-33495 A (TOYOTA MOTOR CORP.) 20 February 2014, paragraph [0020], fig. 5 & US 2015/0188366 A1, paragraph [0026], fig. 5 & WO 2014/020385 A2 & CN 104380576 A | 1-13 |
| A | JP 2010-220387 A (TOYOTA MOTOR CORP.) 30 September 2010, abstract, claims 1-4, fig. 1-9 (Family: none) | 1-13 |

Form PCT/ISA/210 (continuation of second sheet) (January 2015)

**REFERENCES CITED IN THE DESCRIPTION**

**Patent documents cited in the description**

- JP 2013111734 A